Europäisches Patentamt

European Patent Office

Office européen des brevets

(11) Veröffentlichungsnummer: **0 173 839 B1**

# EUROPÄISCHE PATENTSCHRIFT

(45) Veröffentlichungstag der Patentschrift: **13.03.91**

(51) Int. Cl.⁵: **G01N 21/35**

(21) Anmeldenummer: **85109054.8**

(22) Anmeldetag: **19.07.85**

(54) Fotometer zur Messung heisser Gase.

(30) Priorität: **07.09.84 DE 3432874**

(43) Veröffentlichungstag der Anmeldung:
**12.03.86 Patentblatt 86/11**

(45) Bekanntmachung des Hinweises auf die
Patenterteilung:
**13.03.91 Patentblatt 91/11**

(84) Benannte Vertragsstaaten:
**DE FR GB IT**

(56) Entgegenhaltungen:
**DE-B- 2 116 002**
**DE-U- 6 835 844**
**US-A- 3 869 215**

(73) Patentinhaber: **Hartmann & Braun Aktiengesellschaft
Gräfstrasse 97
W-6000 Frankfurt am Main 90(DE)**

(72) Erfinder: **Apel, Willi
Schalkwiesenweg 9
W-6000 Frankfurt (Main)(DE)**
Erfinder: **Bernhardt, Günter
Heerstrasse 194
W-6000 Frankfurt (Main)(DE)**
Erfinder: **Fabinski, Walter
An der Landwehr 70
W-6239 Kriftel(DE)**
Erfinder: **Jedzinsky, Rudolf
Am Ebelfeld 10
W-6000 Frankfurt (Main)(DE)**
Erfinder: **Wolf, Heinz
Friedrichstrasse 67
W-6242 Kronberg(DE)**

Rank Xerox (UK) Business Services

## Beschreibung

Wenn Fotometer, bei denen in einem Gehäuse Strahler, Küvette mit Zu- und Ableitungen und Empfänger angeordnet sind, zur Analyse heißer Gase eingesetzt werden, entsteht eine Reihe thermischer Probleme.

Das heiße Meßgas durchströmt die Meßküvette, wobei eine Kondensation des in dem Meßgas enthaltenen Wasserdampfes entstehen kann, wenn die Temperatur der Küvette unter einen bestimmten Wert sinkt. Es muß demnach dafür gesorgt werden, daß die Temperatur der Küvette zumindest in einem bestimmten Bereich, beispielsweise in einer Höhe von 180° C mit einer Toleranz von + 5° C konstant gehalten wird, oder oberhalb einer Temperatur von 180° C gehalten wird.

Es ist bekannt, daß die Stabilität des Empfängers eines Fotometers nicht gewährleistet ist, wenn es Temperaturschwankungen ausgesetzt ist. Dies gilt für Empfänger aller Fotometerarten. Bei Einsatz eines optopneumatischen Empfängers entsteht ein Einfluß auf die Ausbildung der Absorptionslinien, die einerseits einen temperaturabhängigen Fehler zur Folge hat und andererseits die Empfindlichkeit stark reduziert.

Die Temperaturschwankungen können zudem einen Einfluß haben auf die Lebensdauer des Empfängers und auch auf die Lebensdauer des Strahlers, dessen Lager und insbesondere die Modulationseinrichtung übermäßig beansprucht werden.

In der US-PS 3 869 215 ist eine von einer elektrischen Heizung umgebene Meßzelle für ein photometrisches Analysensystem beschrieben. Die Temperatur der photometrisch zu untersuchende Probe wird mit Hilfe einer außerhalb der Meßzelle angeordneten Temperatur-Regeleinrichtung aufrechterhalten, die die elektrische Heizeinrichtung speist. Da sich sowohl die Lichtquelle wie auch der Lichtempfänger außerhalb der Meßzelle befinden, sind diese Baugruppen thermisch weitgehend entkoppelt.

Durch die Erfindung wird ein Fotometer zur Messung heißer Gase geschaffen, bei dem einerseits Temperaturschwankungen unterdrückt und andererseits hohe Temperaturen von kritischen Bauteilen des Fotometers, wie Strahler und Empfänger, ferngehalten werden. Die Erfindung besteht darin, daß in dem Fotometer, bei dem in einem thermisch leitenden Gehäuse Strahler, Küvette mit Zu- und Ableitungen und Empfänger angeordnet sind, zur Erzeugung eines definierten von der heißen Küvette ausgehenden Wärmeflusses zu anderen Bauteilen des Fotometers thermische Koppelglieder vorgesehen sind, die den Strahler und den Empfänger einerseits mit der Küvette und andererseits mit dem Gehäuse verbinden, so daß ein vorgegebenes Wärmegefälle von Küvette zu Empfänger/Strahler und Gehäuse gewährleistet ist.

Durch die Erfindung ist gewährleistet, daß das Gehäuse in definierter Weise in die thermischen Gegebenheiten des Fotometers einbezogen ist. Es ensteht ein kontinuierlicher Wärmestrom von der aufgeheizten Küvette zu dem Gehäuse. Zur Ableitung der Wärme an die Umgebung kann das Gehäuse mit Kühlelementen, wie Wärmeleitblechen, versehen sein.

Es hat sich als vorteilhaft erwiesen, die Koppelglieder aus Edelstahl, z.B. nach DIN 14571, herzustellen. Auch ein die Wärme schlecht leitendes Material, wie Polyimid kann verwendet werden. Koppelglieder, die die Lichtstrahlen zu führen haben, wie das Koppelglied zwischen Strahler und Küvette oder das Koppelglied zwischen Küvette und Empfänger, haben die Form eines Hohlzylinders, der innen vergoldet ist. Die reflektierende Innenseite des Hohlzylinders unterstützt die Strahlführung.

Das hohl ausgebildete Koppelglied zwischen Küvette und Empfänger bzw. Strahler kann so ausgebildet werden, daß es zusätzlich als Filterküvette dient.

An den Koppelgliedern entsteht ein relativ hohes Wärmegefälle. Die Temperaturdifferenz zwischen Küvette einerseits und Strahler und Empfänger andererseits beträgt z.B. 40 bis 120° C; die Temperaturdifferenz zwischen Strahler und Empfänger einerseits und dem Gehäuse andererseits liegt in der Größenordnung von etwa 10 bis 50° C. Diese Differenzen ergeben sich dadurch, daß die Temperatur der Küvette z.B. auf einem Wert bis 180° C liegt, die des Empfängers bzw. Strahlers bei z.B. 60° C liegen und das Gehäuse sich in einer Atmosphäre von z.B. 5 bis 45° C befindet. Zur Vermeidung von thermischen Nebenschlüssen ist die Küvette gegen die Umgebungsluft thermisch isoliert. Vorzugsweise wird hierzu eine mineralische Isoliermasse verwendet. Aus demselben Grund sind die Gasleitungen zu der Küvette gegen das Gehäuse thermisch isoliert.

Die Temperatur der Küvette, des Empfängers und des Strahlers wird durch Thermostaten überwacht bzw. geregelt. Wenn die Temperatur der Küvette bzw. des Strahlers oder des Empfängers abfällt, wird Wärme zugeführt.

Ein Ausführungsbeispiel des erfindungsgemäß ausgebildeten Fotometers wird anhand der Zeichnung näher erläutert:
Figur 1 zeigt einen Teil des Fotometers
Figur 2 gibt den Wärmeabfall wieder und
Figur 3 zeigt ein Detail.
Gleiche Ziffern in den Figuren der Zeichnung kennzeichnen gleiche Bauteile.

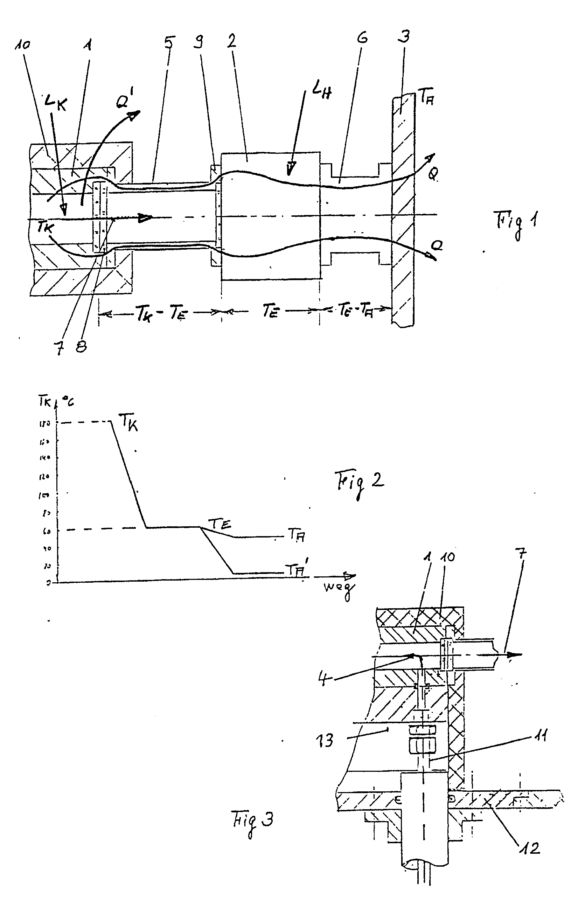

Fig. 1 läßt die Küvette 1, den Empfänger 2 und die Wandung des Gehäuses 3 erkennen. In die Küvette 1 strömen in Richtung des in Fig. 3 angegebenen Pfeiles 4 die zu analysierenden heißen Gase. Damit eine Kondensation des Wasserdampfes in der Küvette 1 nicht erfolgen kann, wird die Küvette 1 auf einer vorgegebenen Temperatur bis z.B. 180° C gehalten. Der Empfänger 2 wird aus Gründen der Stabilität der Messung auf eine Temperatur von z.B. 60° C eingestellt. Das Gehäuse ist der Außentemperatur von 5° C bis 45° C ausgesetzt. Der Verlauf der Temperatur von Küvette 1 zum Gehäuse 3 ist in der grafischen Darstellung gemäß Fig. 2 zu erkennen. Zwischen Küvette 1 und Empfänger 2 befindet sich das Koppelglied 5, in dem die Temperatur z.B. von 180° C auf 60° C (Empfängertemperatur) herabgesetzt wird. Zwischen dem Empfänger 2 und dem Gehäuse 3 ist das Koppelglied 6 angeordnet, über das Wärme von dem Empfänger 2 zu dem Gehäuse strömt, wobei eine weitere Herabsetzung der Temperatur von 60° C auf beispielsweise 10° C erfolgt. Die Wärmeströmung ist durch die Linie Q angedeutet.

Das Koppelglied 6 kann aus vollem Material bestehen. Das Koppelglied 5 ist ein Hohlzylinder, damit die die Küvette 1 in Richtung des Pfeiles 7 verlassenden Lichtstrahlen durch dieses Koppelglied hindurch zu dem Empfänger 2 gelangen können. Die Öffnungen des Koppelgliedes sind durch infrarotlichtdurchlässige Fenster 8 und 9 verschlossen.

Die Temperatur der Küvette 1 kann bis auf den Wert von beispielsweise $T_K$ = 180° C eingestellt werden. $T_E$ ist die Temperatur des Empfängers 2. $T_A$ und $T_{A'}$ sind die angenommenen Grenzwerte der Außentemperatur. Der kaskadenförmige Verlauf der Temperatur gemäß Fig. 2 ist in Fig. 1 durch die Werte $T_K$, $T_K$ - $T_E$, $T_E$ - $T_A$ und $T_A$ gekennzeichnet.

Um den Wärmeverlust durch Abstrahlung (Pfeil Q') zu unterbinden, ist die Küvette 1 mit dem thermischen Isolator 10 versehen. Die Temperatur der Küvette 1 und des Empfängers 2 wird durch Thermostate überwacht. Falls ein zu großer Abfall entsteht, kann eine bestimmte Wärmemenge $L_K$ bzw. $L_H$ im Sinne einer Stabilisierung der Temperatur zugeführt werden.

Es empfiehlt sich dafür zu sorgen, daß auch durch die Zu- und Ableitungen für das Meßgas das thermische Gleichgewicht nicht gestört wird. Die Zuleitung 11 ist mit einer Durchführung 12 aus einem wärmedämmendem Material in dem Gehäuse gelagert.

Unter Umständen ist es vorteilhaft, für die Koppelglieder 5 und 6 Materialien verschiedener Wärmeleitzahlen vorzusehen.

Wie Fig. 3 erkennen läßt, ist an die Küvette 1 ein Wärmeleitblock 13 mechanisch und thermisch angeschlossen. Dieser Wärmeleitblock 13 hat Elemente zum Anschluß der Gaszu- und -ableitungen 11. Der Wärmeleitblock ist beheizt. Die Elemente zur Aufnahme der Gaszu- und -ableitungen sind unabhängig von der Länge der Küvette 1. Die Leitungen, die von dem Wärmeleitblock 13 zu der Küvette 1 führen, haben einen der jeweiligen Küvettenlänge angepaßten Abstand.

Zur weiteren Beherrschung der thermischen Verhältnisse kann ein winkelförmiges Bauteil vorgesehen sein, das die Elemente zur Aufnahme der Gaszu- und ableitungen abdeckt.

## Ansprüche

1. Fotometer zur Messung heißer Gase bestehend aus einem thermisch leitenden Gehäuse (3), in dem ein Strahler (2), eine beheizte Küvette (1) mit Zu- und Ableitungen und ein Empfänger (2) untergebracht sind, wobei sich die Küvette auf einem höheren Temperaturniveau als der Strahler (2) und der Empfänger und diese sich wiederum auf einem höheren Temperaturniveau als das Gehäuse (3) befinden, dadurch gekennzeichnet, daß zur Erzeugung und Erhaltung eines von der Küvette (1) über den Strahler (2) und den Empfänger zum Gehäuse (3) gerichteten Wärmeflusses thermische Koppelglieder (5,6) vorgesehen sind, die den Strahler (2) und den Empfänger (2) einerseits mit der Küvette (1) und andererseits mit dem Gehäuse (3) derart verbinden, daß ein vorgegebenes Temperaturgefälle von der Küvette (1) zu Empfänger und Strahler (2) und zum Gehäuse (3) erhalten bleibt.

2. Fotometer nach Anspruch 1; dadurch gekennzeichnet, daß das Koppelglied (5) zwischen der Küvette (1) und dem Strahler bzw. dem Empfänger (2) aus Edelstahl und das Koppelglied (6) zwischen dem Strahler bzw. dem Empfänger (2) und dem Gehäuse (3) aus Aluminium besteht.

3. Fotometer nach Anspruch 1, dadurch gekennzeichnet, daß das Koppelglied zwischen der Küvette (1) und dem Strahler und das Koppelglied (5) zwischen der Küvette (1) und dem Empfänger (2) die Form eines Hohlzylinders aufweist, der auf seiner Innenfläche vergoldet ist.

## Claims

1. A photometer for measuring hot gases comprising a thermally conductive casing (3), in which a radiation source (2), a heated cuvette (1) having inlet and outlet ducts and a receiver (2) are housed, in which the cuvette is at a higher temperature level than the radiation source (2) and the receiver and the latter are in turn at a higher temperature level than the casing (3), characterised in that in order to produce and maintain a flow of heat directed from the cuvette (1) via the radiation source (2) and the receiver to the casing (3) thermal coupling elements (5,6) are provided, which connect the radiation source (2) and the receiver (2) on the one hand to the cuvette (1) and on the other hand to the casing (3) such that a predetermined temperature drop is maintained from the cuvette (1) to receiver and radiation source (2) and to the casing (3).

2. A photometer according to claim 1, characterised in that the coupling element (5) between the cuvette (1) and the radiation source and/or the receiver (2) consists of high-grade steel and the coupling element (6) between the radiation source and/or the receiver (2) and the casing (3) consists of aluminium.

3. A photometer according to claim 1, characterised in that the coupling element between the cuvette (1) and the radiation source and the coupling element (5) between the cuvette (1) and the receiver (2) has the shape of a hollow cylinder, which is gold-plated on its inside surface.

**Revendications**

1. Photomètre de mesure de gaz chauds, constitué par un corps (3) conducteur de la chaleur, dans lequel sont logés un émetteur de rayonnement (2), une cuve chauffée (1) avec des conduites d'arrivée et de sortie et un récepteur (2), la cuve se trouvant à un niveau de température plus élevé que l'émetteur de rayonnement (2) et le récepteur, ceux-ci étant à leur tour à un niveau de température plus élevé que le corps (3), caractérisé en ce que sont prévus pour la production et le maintien d'un flux de chaleur dirigé vers le corps (3), par l'intermédiaire de l'émetteur (2) et du récepteur, des éléments de couplage (5, 6) thermiques, qui relient l'émetteur (2) et le récepteur (2) d'une part à la cuve (1) et d'autre part au corps, de telle sorte qu'une chute de température déterminée reste maintenue, en partant de la cuve (1), vers le récepteur et l'émetteur (2), et vers le corps (3).

2. Photomètre d'après la revendication 1, caractérisé en ce que l'élément de couplage (5) entre la cuve (1) et l'émetteur ou le récepteur (2) est en acier spécial et en ce que l'élément de couplage (6) entre l'émetteur ou le récepteur (2) et le corps (3) est en aluminium.

3. Photomètre selon la revendication 1, caractérisé en ce que l'élément de couplage entre la cuve (1) et l'émetteur et l'élément de couplage (5) entre la cuve (1) et le récepteur (2) présentent la forme d'un cylindre creux, qui est doré sur sa surface intérieure.

Fig 1

Fig 2

Fig 3

EP 0 173 839 B1

5